# EUROPÄISCHE PATENTSCHRIFT

(11) **EP 0 922 240 B1**
(45) Veröffentlichungstag und Bekanntmachung des Hinweises auf die Patenterteilung: **14.06.2000**
(21) Anmeldenummer: 97942789.5
(22) Anmeldetag: 28.08.1997
(51) Int. Cl.: G02B 6/42

(54) **VERFAHREN ZUM HERSTELLEN EINES ELEKTROOPTISCHEN MODULS**
METHOD FOR THE PRODUCTION OF AN ELECTROOPTICAL MODULE
PROCEDE DE FABRICATION D'UN MODULE ELECTRO-OPTIQUE

(30) Priorität: 28.08.1996 DE 19636239; 27.09.1996 DE 19641395
(43) Veröffentlichungstag der Anmeldung: 16.06.1999
(73) Patentinhaber: SIEMENS AKTIENGESELLSCHAFT, 80333 München (DE)
(72) Erfinder: GRUMM, Mathias, D-12679 Berlin (DE); HANKE, Bernd, D-14109 Berlin (DE); MEYER-GÜLDNER, Frank, D-12347 Berlin (DE); OELZE, Oliver, D-12435 Berlin (DE); STEFFENSEN, Andreas, D-13161 Berlin (DE); SCHULZE, Joachim, D-12163 Berlin (DE)
(86) Internationale Anmeldenummer: DE9701954
(87) Internationale Veröffentlichungsnummer: WO9809187

(56) Entgegenhaltungen:
- EP-A- 0 351 211
- WO-A-94/04955
- WO-A-94/19718

## Beschreibung

Die Erfindung liegt auf dem Gebiet der Kopplung optischer und elektrooptischer Elemente und insbesondere der Kopplung eines Lichtwellenleiterendes mit einem elektrooptischen Bauteil und betrifft ein Verfahren zum Herstellen eines elektrooptischen Moduls, das frontseitig eine Kopplungsbuchse zur Aufnahme eines Lichtwellenleiterendes und rückwärtig einen Aufnahmebereich für ein elektrooptisches Bauteil aufweist, bei dem das elektrooptische Bauteil in eine Position maximaler optischer Kopplung mit einem von der Kopplungsbuchse aufgenommenen Lichtwellenleiterende gebracht wird und bei dem das Bauteil in dieser Position mittels Klebstoff mit dem Aufnahmebereich verbunden wird.

Im Rahmen der vorliegenden Erfindung ist unter einem elektrooptischen Bauteil sowohl ein optischer Sender (z. B. Laserdiode) als auch ein Empfänger (z. B. Photodiode) zu verstehen, der elektrische Signale in optische bzw. optische in elektrische Signale umwandelt (optoelektronischer Wandler).

Bei elektrooptischen Modulen besteht das Bestreben, einen möglichst hohen Kopplungswirkungsgrad zwischen den Kopplungspartnern zu gewährleisten. Dazu muß z. B. das Lichtwellenleiterende hochgenau in bezug auf die optisch aktive Fläche (Abstrahl- bzw. Empfangsfläche) des elektrooptischen Bauteils ausgerichtet sein. Im Strahlengang zwischen Lichtwellenleiterende und elektrooptischem Bauteil kann eine Linse angeordnet sein. Häufig besteht Bedarf nach einer lösbaren Ankopplung des Lichtwellenleiterendes, wobei das Lichtwellenleiterende üblicherweise in einer zentralen Bohrung eines Steckerstiftes aufgenommen ist. Der Steckerstift wird zur Ankopplung in die Kopplungsbuchse eingeführt und in der eingeführten Position lösbar fixiert. Um auch im Hinblick auf verschiedene Kopplungspartnerkonstellationen stets eine hohe Kopplungsgüte zu gewährleisten, muß das elektrooptische Bauteil in bezug auf die Kopplungsbuchse und damit indirekt auf den von der Kopplungsbuchse aufzunehmenden Kopplungspartner hochpräzise und langzeitbeständig fixiert werden. Zur Fixierung können Laserschweißverfahren angewandt werden, die sehr gute Verfahrensergebnisse bei vergleichsweise kurzen Taktzeiten bieten; dabei sind die schweißbaren Bauelemente jedoch hinsichtlich der Werkstoffwahl sehr eingeschränkt und vergleichsweise teuer. Die zur Verfahrensdurchführung notwendigen Vorrichtungen und Schweißanlagen erfordern hohe Investitionen.

Insbesondere zur Herstellung preiswerter elektrooptischer Module werden daher zur Verbindung zunehmend Klebstoffe eingesetzt. Dadurch können preisgünstige Einzelteile, beispielsweise aus Kunststoff, verwendet werden.

Aus der EP 0 351 211 A2 ist ein Verfahren zum Herstellen eines optischen Steckerstiftes bekannt, der gleichzeitig ein Gehäuse zur vollständigen Aufnahme einer elektrooptischen Wandleranordnung bildet. Dabei wird die Wandleranordnung in eine Gußform eingebracht, von einem licht- und/oder wärmeaushärtbaren Vergußmaterial umgeben und nach Ausrichtung auf einen Referenzstecker durch Aushärten des Vergußmaterials fixiert. Nach Entnahme aus der Gußform ist ein Steckerstift geschaffen, wobei die Wandleranordnung präzise bezüglich der konzentrischen Steckerstiftmantelfläche positioniert ist.

Das dauerhafte Ausrichten einer optoelektronischen Wandleranordnung bezüglich eines Lichtwellenleiterendes unter Zuhilfenahme einer Kopplungsbuchse ist in der WO 94/04955 beschrieben. Dabei werden die Wandleranordnung und das Lichtwellenleiterende zueinander ausgerichtet, in einer Spannvorrichtung vorläufig fixiert und nachfolgend mit der zumindest die Wandleranordnung umschließenden Kopplungsbuchse verklebt.

Ein Verfahren der eingangs genannten Art ist aus der DE-43 11 980 C1 bekannt. Nach diesem bekannten Verfahren wird ein Modul mit einer frontseitigen Hülse zur Aufnahme eines Steckerstiftes und mit einem rückwärtigen Aufnahmeraum für eine Laserdiode unter Verwendung eines lichtaushärtenden Klebstoffs hergestellt. Zur Ausrichtung der Laserdiode wird ein Steckerstift mit einem Lichtwellenleiterende bis zu einem Anschlag eingeführt, das bei Ansteuerung von der Laseriode emittierte Licht in das Lichtwellenleiterende eingekoppelt und hinsichtlich seiner Intensität am anderen Lichtwellenleiterende ausgewertet. Durch Verschieben des Bauteils relativ zu der Laserdiode wird unter Auswertung der Intensität die optimale Kopplungsposition bestimmt. In dieser Position wird der Klebstoff ausgehärtet (sog. "aktive Justage"). Dabei ist jedoch im Hinblick auf die Aushärtung des Klebstoffs eine die Werkstoffauswahl einschränkende Verwendung von lichtdurchlässigem Material für den Aufnahmebereich (Halterung) und/oder eine vergleichsweise lange Belegung der Fertigungseinrichtung zumindest solange erforderlich, bis der Klebstoff eine Grundfestigkeit erlangt hat, die eine Entnahme der halbfertigen Baugruppe erlaubt. Im Hinblick auf diese Problematik ist eine gleichzeitige Verwendung mehrerer Klebstoffe denkbar, wobei ein erster, schnell aushärtender Klebstoff für eine Vorfixierung sorgt. Dabei treten jedoch zusätzliche fertigungstechnische Schwierigkeiten und teilweise konträre Optimierungsziele auf. So wäre eine mehrfache Klebstoffapplikation notwendig. Ferner weisen hochgefüllte Klebstoffe zwar mechanisch günstige Eigenschaften auf, können aber die Härtung des schnellhärtenden Klebstoffes beeinträchtigen.

Die erfindungsgemäße Aufgabe besteht in der Schaffung eines Verfahrens zum Herstellen eines elektrooptischen Moduls, das eine langzeitstabile und insbesondere bei mechanischen und klimatischen äußeren Belastungen dauerhafte und mechanisch feste Verbindung des Bauteils mit dem Aufnahmebereich bei äußerst kurzen Taktzeiten zumindest für die zur Justage und präzisen Positionierung verwendeten Vorrichtungen gewährleistet.

Diese Aufgabe wird bei einem Verfahren der eingangs genannten Art erfindungsgemäß durch die Merkmale des Anspruchs 1 gelöst.

Ein wesentlicher Vorteil des erfindungsgemäßen Verfahrens besteht darin, daß der Klebstoff durch Lichtbestrahlung - z. B. durch UV-Licht - sehr schnell angehärtet werden kann und damit bereits eine soweit ausreichende Fixierung und Festigkeit erlangt, daß die vorrichtungsseitige, präzise Fixierung des elektrooptischen Bauteils durch die eigene Vorfixierung ersetzbar wird. Dadurch kann das soweit vormontierte elektrooptische Modul bereits nach kurzer Taktzeit aus der der äußeren Fixierung und ggf. Justage dienenden Vorrichtung entnommen werden. Die Vorrichtung kann in fertigungstechnisch vorteilhafter Weise anschließend bereits zur Justage und Fixierung eines weiteren elektrooptischen Moduls verwendet werden. Die anschließende vollständige Fixierung des Bauteils in dem Aufnahmebereich durch Wärmeaushärtung insbesondere der dem Licht unzugänglichen Bereiche kann vorteilhafterweise zeitlich oder räumlich getrennt erfolgen. Ein weiterer wesentlicher Vorteil des erfindungsgemäßen Verfahrens besteht darin, daß nur eine einzige Klebstoffapplikation notwendig ist.

Für das erfindungsgemäße Verfahren haben sich als besonders geeignet die in der deutschen Patentanmeldung 195 45 552 und die in der EP 0 504 569 A2 offenbarten Kompositionen sowie der unter dem Handelsnamen DELO-DUOKAT® VE 293 der Fa. DELO Industrieklebstoffe GmbH & Co. KG, Ohmstr. 3, 86899 Landsberg vertriebene Zweikomponenten-Klebstoff erwiesen.

Eine weitere fertigungstechnische Vereinfachung hinsichtlich der Klebstoffapplikation ergibt sich nach einer vorteilhaften Ausgestaltung des erfindungsgemäßen Verfahrens dadurch, daß der Fügespalt zwischen dem Aufnahmebereich und dem elektrooptischen Bauteil und/oder einem Bauteilträger in einer Ebene ausgebildet wird, die senkrecht zu der Längsachse der Kopplungsbuchse steht.

Eine dazu bevorzugte Ausgestaltung der Erfindung sieht vor, daß am Fügespalt mindestens ein parallel zur Längsachse der Kopplungsbuchse ausgerichteter Klebespalt zwischen mindestens einem Ansatz und mindestens einer Ausnehmung von Aufnahmebereich der Kopplungsbuchse und elektrooptischem Bauteil mit einer Spaltbreite ausgebildet wird, die eine Ausrichtung des elektrooptischen Bauteils in eine Position maximaler optischer Kopplung zuläßt, und daß der Klebstoff in den Klebespalt eingebracht wird.

Ein wesentlicher Vorteil dieser Ausgestaltung besteht darin, daß das Modul mittels des Klebespaltes eine besonders feste und damit zuverlässige Verbindung zwischen dem elektrooptischen Bauteil und dem Aufnahmebereich der Kopplungsbuchse aufweist, weil neben dem Fügespalt zusätzlich der Klebespalt vorgesehen ist.

Dabei kann der mindestens eine Ansatz an dem Aufnahmebereich der Kopplungsbuchse oder an dem elektrooptischen Bauteil und die mindestens eine Ausnehmung dementsprechend an dem elektrooptischen Bauteil oder an dem Aufnahmebereich vorgesehen werden. Auch kann jeweils mehr als ein Ansatz bzw. mehr als eine Ausnehmung vorgesehen werden, wenn dies die konstruktiven und optischen Anforderungen an das elektrooptische Modul zulassen.

Als besonders vorteilhaft wird es angesehen, wenn der Aufnahmebereich der Kopplungsbuchse an seinem äußeren Rande mit mehreren Ansätzen in Form von Zapfen versehen wird und das elektrooptische Bauteil an seinem äußeren Rande mit im montierten Zustand mit den Zapfen fluchtenden Ausnehmungen ausgestattet wird.

Dabei sind nämlich relativ große Bereiche der Klebespalte dem Licht aussetzbar, was der Vorfixierung des verwendeten Klebstoffs durch Lichtaushärtung förderlich ist.

Um im ersten Aushärteschritt dem Licht einen mehrfachen Zugang zu dem Fügebereich zu ermöglichen, sieht eine vorteilhafte Ausgestaltung der Erfindung vor, daß durch geometrische Formgebung und/oder optische Eigenschaften des elektrooptischen Bauteils und/oder einem Bauteilträger und/oder des Aufnahmebereichs ein zusätzlicher Lichtzutritt zu dem Klebstoff geschaffen wird.

Die dem Lichtzutritt dienende geometrische Formgebung kann in zusätzlicher Funktion zu einer wesentlichen Erhöhung der mechanischen Stabilität der Verbindung dadurch beitragen, daß das elektrooptische Bauteil und/oder ein Bauteilträger und/oder der Aufnahmebereich mit von außen lichtzugänglichen und zum Fügespalt führenden Öffnungen versehen sind, die sich zum Fügespalt hin verjüngen und in die Klebstoff eingebracht wird.

Das erfindungsgemäße Verfahren wird nachfolgend anhand von Ausführungsbeispielen weiter erläutert; es zeigen:
- Figur 1: ein elektrooptisches Modul im halbsymmetrischen Längsschnitt,
- Figur 2: wesentliche Verfahrensschritte;
- Figur 3: eine Draufsicht auf ein weiteres nach dem erfindungsgemäßen Verfahren hergestelltes elektrooptisches Modul,
- Figur 4: einen Schnitt durch das Modul nach Figur 3 gemäß der Linie II-II,
- Figur 5: eine Seitenansicht des Modul nach Figur 3,
- Figur 6: eine perspektivische Ansicht des zusammengesetzten elektrooptischen Moduls und
- Figur 7: eine Sprengzeichnung des Moduls nach Figur 6.

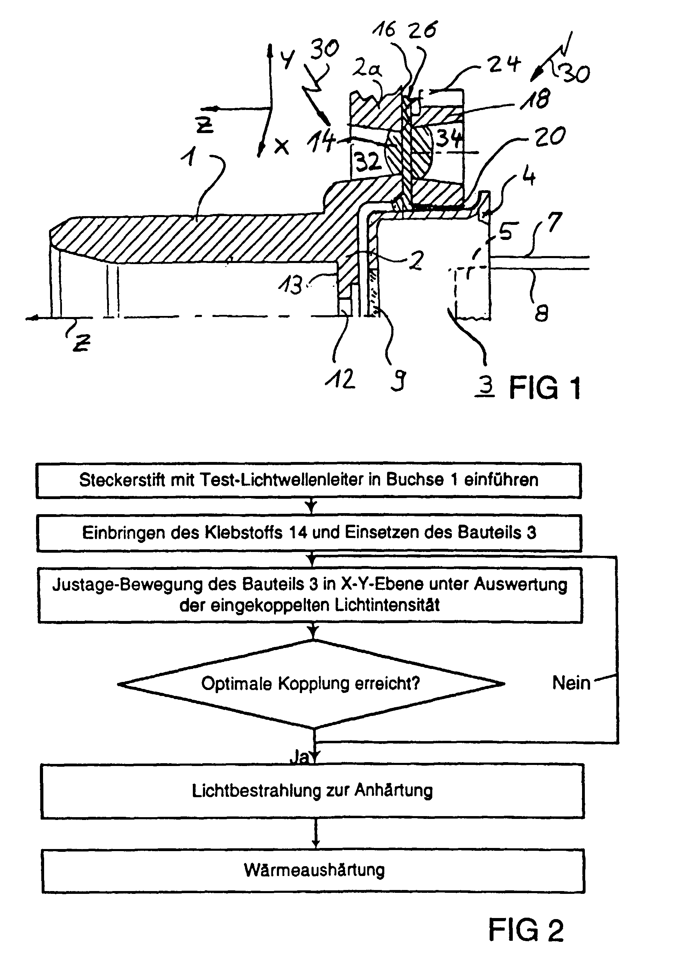

Gemäß Figur 1 umfaßt das elektrooptische Modul eine auch als Flansch bezeichnete Kopplungsbuchse 1 zur Aufnahme eines nicht näher dargestellten Lichtwellenleitersteckers, in dessen zentraler Bohrung in üblicher Weise ein Ende eines Lichtwellenleiters angeordnet ist. Die Kopplungsbuchse 1 ist einstückig mit einem rückwärtigen Aufnahmebereich 2 ausgebildet, der zur Aufnahme eines elektrooptischen Bauteils 3 dient und einen sich radial nach außen erstreckenden Flansch 2a aufweist. Das elektrooptische Bauteil umfaßt ein Gehäuse 4 und beispielsweise einen optischen Sender (Laserdiode) 5, der über in das Gehäuse 4 eintretende elektrische Anschlüsse 7, 8 ansteuerbar ist. Bei elektrischer Ansteuerung gibt die Laserdiode 5 Lichtsignale ab, die über ein optisches Fenster 9 und/oder eine Linse und einen die Kopplungsbuchse mit dem Aufnahmebereich verbindenden optischen Kanal 12 in das Lichtwellenleiterende einkoppelbar sind.

Zur Herstellung des elektrooptischen Moduls (Figur 2) wird ein Steckerstift mit einem Lichtwellenleiterende in die Kopplungsbuchse 1 bis zum Anschlag 13 eingeführt und am anderen Ende des Lichtwellenleiters die in diesen eingekoppelten Lichtsignale hinsichtlicher ihrer Intensität ausgewertet. Von der rückwärtigen Seite wird ein sowohl lichtaushärtbarer als auch wärmeaushärtbarer Klebstoff ("Dual-Cure-Epoxy") auf eine rückwärtige Flanschseite 16 des Flansches 2a aufgebracht. Anschließend wird das von einem Montagering 18 umgebene und mit diesem fest - z. B. durch vorhergehende Schweißung in einem Schweißbereich 20 - verbundene elektrooptische Bauteil unter Zwischenlage des Klebstoffs 14 zwischen dem Montagering 18 und der Flanschfläche 16 in den Aufnahmebereich 2 zentral eingeführt. Damit bildet sich zwischen der Flanschseite 16 und der ihr zugewandten Oberfläche 24 des Montagerings ein klebstoffgefüllter Fügespalt 26, der eine Justagebewegung des Bauteils 3 in der zur Längsachse Z des Moduls bzw. der Kopplungsbuchse 1 senkrechten Ebene X-Y erlaubt.

Unter aktiver Justage wird das elektrooptische Bauteil 3 in dem Aufnahmebereich 2 derart in X-Y-Ebene positioniert, daß ein Signalmaximum und damit die Position maximaler optischer Kopplung erreicht wird (Figur 2). In dieser Position erfolgt eine durch Pfeile 30 dargestellte Belichtung des Fügespaltbereiches, die zu einer sofortigen Anhärtung des Klebstoffs 14 führt. Um den Lichtzutritt weiter zu erleichtern, sind sowohl in dem flanschartigen Ausläufer 2a des Aufnahmebereichs 2 als auch in dem Montagering 18 Durchgangsöffnungen 32, 34 vorgesehen, die sich zum Fügespalt 26 hin konisch verjüngen. In diese Öffnungen 32, 34 tritt während des Fügevorgangs ein Teil des Klebstoffs 14 ein und bildet nach Aushärtung einen zusätzlichen Formschluß zwischen den Fügepartnern 2a, 18. Anschließend kann nach äußerst kurzer Aushärte- und Taktzeit das vorgefertigte Modul bereits aus der nicht näher gezeigten Fertigungsvorrichtung entnommen und anschließend zeitlich und örtlich getrennt einem Wärmeaushärtungsprozeß unterzogen werden, in dem auch die dem Licht nicht zugänglichen Klebstoffpartien vollständig und dauerhaft ausgehärtet werden.

Durch die senkrechte Orientierung des Fügespaltes 26 zur Achse Z ist in fertigungstechnisch vorteilhafter Weise eine besonders einfache und nach dem erfindungsgemäßen Verfahren nur einmal notwendige Applikation des Klebstoffs 14 möglich. Die senkrecht zum Fügespalt ausgebildeten konischen Öffnungen 32, 34 ermöglichen vorteilhafterweise eine zusätzliche Lichtbestrahlung des Fügebereichs und bilden ferner nach Aushärtung des Klebstoffs einen die mechanische Festigkeit erhöhenden Formschluß.

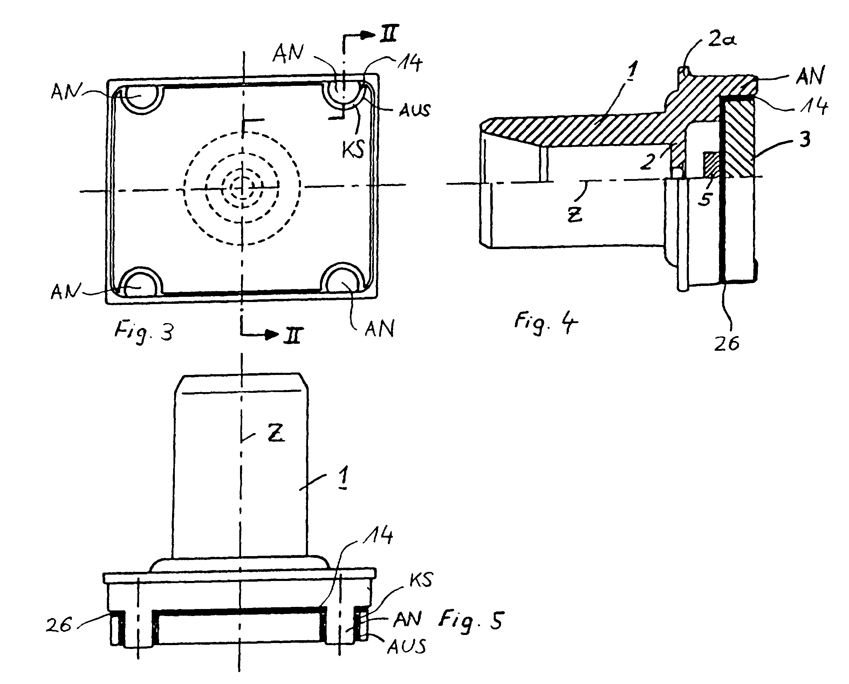

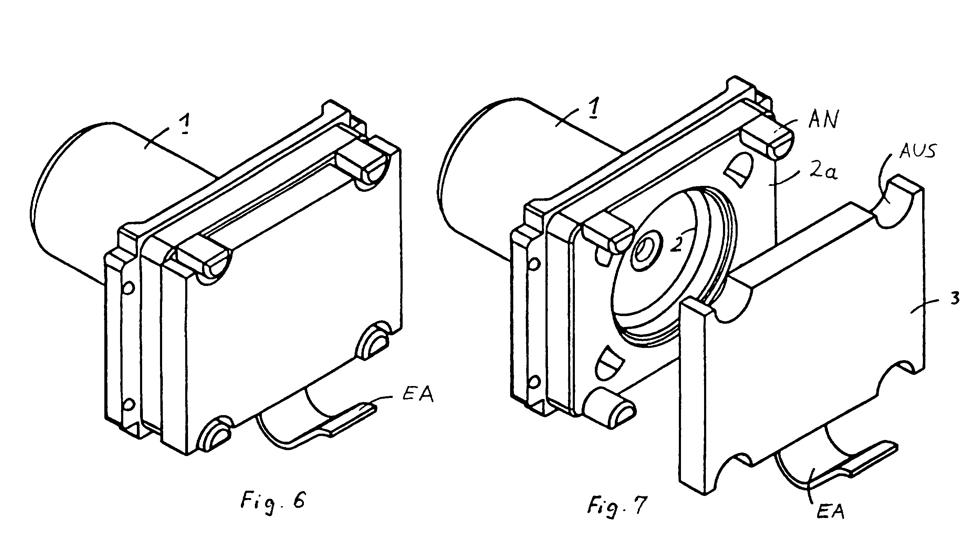

Wie das in Figur 3 dargestellte weitere Ausführungsbeispiel zeigt, kann das Bauteil 3 scheibenförmig ausgebildet sein und einen optischen Sender 5 aufweisen, der als Laserdiode ausgebildet sein kann. Der optische Sender 5 ist über elektrische Anschlüsse EA (vgl. Figuren 6 und 7) ansteuerbar. Der optische Sender 5 gibt dann Lichtsignale ab, die über eine ggf. eine Linse enthaltende Öffnung in das Ende eines nicht dargestellten Lichtwellenleiters einkoppelbar sind.

Ergänzend zu dem vorbeschriebenen Fügespalt 26 sind am Rande des Flansches 2a der Kopplungsbuchse 1 vier Zapfen AN (Figur 3) vorgesehen, die sich parallel zur Längsachse Z der Kopplungsbuchse 1 erstrecken. Diese Zapfen AN greifen im montierten Zustand - wie insbesondere die Figuren 5 und 6 zeigen-in Ausnehmungen AUS am Rande des elektrooptischen Bauteils 3 ein. Dabei sind die Zapfen im Hinblick auf die Öffnungen AUS so bemessen, daß sich jeweils ein Klebespalt KS ergibt, der in seiner Breite so gewählt ist, daß er bei der Montage des elektrooptischen Moduls ein Ausrichten in eine Position maximaler optischen Kopplung zuläßt.

Bei der Herstellung des erfindungsgemäßen elektrooptischen Moduls wird nicht nur der Fügespalt 26 mit sowohl lichtaushärtbaren als auch wärmeaushärtbaren Klebstoff 14 versehen, sondern auch der jeweilige Klebespalt KS. Aufgrund der Verwendung eines solchen Klebstoffes läßt sich eine Vorfixierung durch Lichtaushärtung nach Aurichtung der Kopplungsbuchse 1 in bezug auf das elektrooptische Bauteil 3 nicht nur im Bereich des Fügespaltes 26, sondern auch im Bereich des Klebespaltes KS vornehmen, weil zu diesem Klebespalt das Licht einen guten Zutritt hat. Anschließend erfolgt eine Wärmeaushärtung, so daß dann das elektrooptische Modul aus der Kopplungsbuchse 1 mit dem elektrooptischen Baustein 3 dauerhaft und mechanisch sehr fest zusammengefügt ist.

## Patentansprüche

1. Verfahren zum Herstellen eines elektrooptischen Moduls mit einem Modulkörper, der frontseitig eine Kopplungsbuchse (1) zur Aufnahme eines Lichtwellenleiterendes und rückwärtig einen Aufnahmebereich (2) für ein elektrooptisches Bauteil (3) aufweist, bei dem das elektrooptische Bauteil (3) in eine Position maximaler optischer Kopplung mit einem von der Kopplungsbuchse (1) aufgenommenen Lichtwellenleiterende gebracht wird und bei dem das Bauteil (3) in dieser Position mittels Klebstoff (14) mit dem Aufnahmebereich (2) verbunden wird, **dadurch gekennzeichnet, daß** als Klebstoff (14) ein sowohl lichtaushärtbares als auch wärmeaushärtbares Material verwendet wird,
daß zunächst in der Position maximaler optischer Kopplung eine Vorfixierung durch Lichtaushärtung (30) des Klebstoffs (14) vorgenommen wird und
daß in einem zeitlich und/oder räumlich separaten nachfolgenden Herstellungsschritt eine vollständige dauerhafte Verbindung durch Wärmeaushärtung geschaffen wird.

2. Verfahren nach Anspruch 1,
**dadurch gekennzeichnet, daß** der Fügespalt (26) zwischen dem Aufnahmebereich (2) und dem elektrooptischen Bauteil (3) und/oder einem Bauteilträger (18) in einer Ebene (X-Y) ausgebildet wird, die senkrecht zu der Längsachse (Z) der Kopplungsbuchse (1) steht.

3. Verfahren nach Anspruch 2,
**dadurch gekennzeichnet, daß** am Fügespalt (26) mindestens ein parallel zur Längsachse (Z) der Kopplungsbuchse (1) ausgerichteter Klebespalt (KS) zwischen mindestens einem Ansatz (AN) und mindestens einer Ausnehmung (AUS) von Aufnahmebereich (2) der Kopplungsbuchse (1) und elektrooptischem Bauteil (3) mit einer Spaltbreite ausgebildet wird, die eine Ausrichtung des elektrooptischen Bauteils (3) in eine Position maximaler optischer Kopplung zuläßt, und daß der Klebstoff (14) in den Klebespalt (KS) eingebracht wird.

4. Verfahren nach Anspruch 3,
**dadurch gekennzeichnet, daß** der Aufnahmebereich (2) der Kopplungsbuchse (1) an seinem äußeren Rande mit mehreren Ansätzen in Form von Zapfen (AN) versehen wird und das elektrooptische Bauteil (3) an seinem äußeren Rande mit im montierten Zustand mit den Zapfen (AN) fluchtenden Ausnehmungen (AUS) ausgestattet wird.

5. Verfahren nach einem der vorangehenden Ansprüche,
**dadurch gekennzeichnet, daß** durch geometrische Formgebung und/oder optische Eigenschaften des elektrooptischen Bauteils (3) und/oder einem Bauteilträger (18) und/oder des Aufnahmebereichs (2) ein zusätzlicher Lichtzutritt zu dem Klebstoff (14) geschaffen wird.

6. Verfahren nach Anspruch 5,
**dadurch gekennzeichnet, daß** das elektrooptische Bauteil (3) und/oder ein Bauteilträger (18) und/oder der Aufnahmebereich (2) mit von außen lichtzugänglichen und zum Fügespalt (26) führenden Öffnungen (32,34) versehen wird, die sich zum Fügespalt (26) hin verjüngen und in die Klebstoff (14) eingebracht wird.

## Claims

1. Method for producing an electrooptical module having a module body which has, on the front side, a coupling bushing (1) for receiving an optical waveguide end and, at the rear, a receiving region (2) for an electrooptical component (3), in which method the electrooptical component (3) is brought into a position of maximum optical coupling with an optical waveguide end received by the coupling bushing (1) and in which method the component (3), in this position, is connected to the receiving region (2) by means of adhesive (14), characterised in that a material which is both photo-setting and thermo-setting is used as the adhesive (14), in that first of all, in the position of maximum optical coupling, a pre-fixing is carried out by photo-setting (30) of the adhesive (14), and in that in a subsequent production step which is separate with respect to time and/or with respect to space, a complete permanent connection is created by thermo-setting.

2. Method according to claim 1, characterised in that the joining gap (26) between the receiving region (2) and the electrooptical component (3) and/or a component carrier (18) is formed in a plane (X-Y) at right angles to the longitudinal axis (Z) of the coupling bushing (1).

3. Method according to claim 2, characterised in that there is formed at the joining gap (26) at least one adhesive gap (KS) between at least one projection (AN) and at least one recess (AUS) of the receiving region (2) of the coupling bushing (1) and the electrooptical component (3), which adhesive gap is aligned in parallel with the longitudinal axis (Z) of the coupling bushing (1) and has a gap width which allows an alignment of the electrooptical component (3) in a position of maximum optical coupling, and in that the adhesive (14) is placed in the adhesive gap (KS).

4. Method according to claim 3, characterised in that the receiving region (2) of the coupling bushing (1) is provided, on its outer edge, with a plurality of projections in the form of pegs (AN) and the electrooptical component (3) is provided, on its outer edge, with recesses (AUS) which are in alignment with the pegs (AN) in the mounted state.

5. Method according to one of the preceding claims, characterised in that as a result of geometric shaping and/or optical properties of the electrooptical component (3) and/or a component carrier (18) and/or the receiving region (2), there is created an additional access of light to the adhesive (14).

6. Method according to claim 5, characterised in that the electrooptical component (3) and/or a component carrier (18) and/or the receiving region (2) is provided with openings (32, 34) which are accessible to light from the outside and lead to the joining gap (26), which openings taper towards the joining gap (26) and in which openings adhesive (14) is placed.

## Revendications

1. Procédé de fabrication d'un module électro-optique comportant un élément de module qui comporte, côté frontal, une douille (1) de couplage pour la réception d'une extrémité de guide d'onde lumineuse et, côté arrière, une zone (2) de réception pour un composant (3) électro-optique, dans lequel le composant (3) électro-optique est mis en une position de couplage maximum en ayant une extrémité de guide d'onde lumineuse reçue par la douille (1) de couplage et dans lequel le composant (3) est relié en cette position à la zone (2) de réception à l'aide de colle (14), caractérisé en ce que l'on utilise comme colle (14) un matériau qui durcit aussi bien à la lumière qu'à la chaleur, en ce que l'on procède d'abord en la position de couplage optique maximum à une immobilisation préalable par durcissement (30) à la lumière de la colle (14) et en ce que, à une étape de fabrication suivante, séparée dans le temps et/ou dans l'espace, on forme une liaison complète durable par durcissement à la chaleur.

2. Procédé suivant la revendication 1, caractérisé en ce que l'on réalise la fente (26) de jointure entre la zone (2) de réception et le composant (3) électro-optique et/ou un porte-composant (18) dans un plan (X-Y) qui est perpendiculaire à l'axe (Z) longitudinal de la douille (1) de couplage.

3. Procédé suivant la revendication 2, caractérisé en ce qu'on réalise sur la fente (26) de jointure au moins une fente (KS) de collage, orientée parallèlement à l'axe (Z) de la douille (1) de couplage, entre au moins un prolongement (AN) et au moins un évidement (AUS) de la zone (2) de réception de la douille (1) de couplage et du composant (3) électro-optique, à une largeur de fente qui permet une orientation du composant (3) électro-optique en une position de couplage optique maximum, et en ce que l'on introduit la colle (14) dans la fente (KS) de collage.

4. Procédé suivant la revendication 3, caractérisé en ce que l'on munit la zone (2) de réception de la douille (1) de couplage, sur son bord extérieur, de plusieurs prolongements en forme de tourillons (AN) et en ce que l'on munit le composant (3) électro-optique, sur son bord extérieur, d'évidements (AUS) qui, à l'état assemblé, sont en alignement avec les tourillons (AN).

5. Procédé suivant l'une des revendications précédentes, caractérisé en ce que l'on forme par façonnage géométrique et/ou par des propriétés optiques du composant (3) électro-optique et/ou d'un porte-composant (18) et/ou de la zone (2) de réception un accès pour la lumière supplémentaire à la colle (14).

6. Procédé suivant la revendication 5, caractérisé en ce que l'on munit le composant (3) électro-optique et/ou un porte-composant (18) et/ou la zone (2) de réception d'ouverture (32, 34) qui sont accessibles à la lumière de l'extérieur, qui vont à la fente (26) de jointure, qui se rétrécissent en direction de la fente (26) de jointure et dans lesquels on introduit la colle (14).
